# EUROPÄISCHE PATENTSCHRIFT

(11) **EP 1 789 765 B1**
(45) Veröffentlichungstag und Bekanntmachung des Hinweises auf die Patenterteilung: **05.11.2008**
(21) Anmeldenummer: 05787202.0
(22) Anmeldetag: 16.09.2005
(51) Int. Cl.: G01K 11/24

(54) **TEMPERATURBESTIMMUNG EINER ABGEWANDTEN FLÄCHE EINES OBJEKTES**
TEMPERATURE DETERMINATION OF AN AWAY-FACING SURFACE OF AN OBJECT
DETERMINATION DE TEMPERATURE D'UNE SURFACE OPPOSEE D'UN OBJET

(30) Priorität: 17.09.2004 DE 102004045198; 01.09.2005 DE 102005041722
(43) Veröffentlichungstag der Anmeldung: 30.05.2007
(73) Patentinhaber: SIEMENS AKTIENGESELLSCHAFT, 80333 München (DE)
(72) Erfinder: BRUMMEL, Hans-Gerd, 13465 Berlin (DE); LINNERT, Uwe, 90766 Fürth (DE); NEWERLA, Klaus, 90419 Nürnberg (DE); WILLSCH, Michael, 90762 Fürth (DE)
(86) Internationale Anmeldenummer: PCT/EP2005/054607
(87) Internationale Veröffentlichungsnummer: WO 2006/030025

(56) Entgegenhaltungen:
- FR-A- 1 562 549
- US-A1- 2003 029 242
- PATENT ABSTRACTS OF JAPAN Bd. 2003, Nr. 06, 3. Juni 2003 (2003-06-03) & JP 2003 042857 A (TOSHIBA CORP), 13. Februar 2003 (2003-02-13) in der Anmeldung erwähnt

## Beschreibung

Die Erfindung betrifft ein Verfahren und eine Messvorrichtung zur Bestimmung der Temperatur einer abgewandten Fläche eines Objektes sowie eine Verwendung des Verfahrens und eine Verwendung der Messvorrichtung. Ein entsprechendes Verfahren und eine entsprechende Vorrichtung zur Temperaturbestimmung mittels Ultraschall gehen aus der JP 2003042857 A hervor.

Strömungsmaschinen, wie beispielsweise Dampf- oder Gasturbinen, werden als Wärme-Kraft-Maschinen in der Technik eingesetzt, um eine in einem Gasstrom gespeicherte Energie in eine mechanische Energie zu überführen, insbesondere in eine Drehbewegung. Darüber hinaus kommen auch Strömungsmaschinen wie Verdichter in Betracht, mit denen mechanische Energie einem Gasstrom zugeführt werden kann. Um bei Gasturbinen einen möglichst großen Gesamtwirkungsgrad hinsichtlich der Energieausnutzung zu erreichen, werden die Gaseintrittstemperaturen von der Brennkammer in den Strömungskanal der Gasturbine möglichst hoch gewählt. Beispielsweise liegen die Gaseintrittstemperaturen bei über 1000°C.

Dies erfordert, dass bei diesen hohen physikalischen Belastungen die Strömungsmaschine in Betrieb unter Beobachtung steht. Dabei liefert insbesondere die Temperaturmessung innerhalb der Strömungsmaschine wichtige Informationen über den Zustand der Strömungsmaschine. In der Regel werden hierfür in der Strömungsmaschine angebrachte Messsonden verwendet, deren Signal- und Versorgungsleitungen mittels Durchführungen durch die Wand der Strömungsmaschine nach außen führen. Eine hohe Anzahl von Temperaturmessstellen erfordert daher eine hohe Anzahl von Durchführungen und Abdichtungen. Diese stellen unter den hohen physikalischen Belastungen stets Fehlerquellen dar, die möglichst zu vermeiden sind, um einen zuverlässigen Betrieb der Strömungsmaschine zu gewährleisten.

In der JP 2003042857 A ist ein Verfahren und eine Vorrichtung angegeben, mit welchen die Temperatur einer der Vorrichtung abgewandten, mit einer Flüssigkeit in Kontakt stehenden Oberfläche einer Wandung und damit die Temperatur der Flüssigkeit mittels Ultraschall gemessen werden können. Hierbei werden Ultraschallwellen durch die der Vorrichtung zugewandte Oberfläche der Wandung in die Wandung eingestrahlt und an der abgewandten Oberfläche reflektiert. Das Verhältnis der Amplituden der Ultraschallwellen vor und nach der Reflektion an der abgewandten, mit der Flüssigkeit in Kontakt stehenden Oberfläche hängt dabei vom akustischen Reflektionsfaktor der Oberfläche ab, welcher wiederum durch die akustische Impedanz der Flüssigkeit bestimmt wird. Da die akustische Impedanz der Flüssigkeit temperaturabhängig ist, lässt sich letztendlich aus der Ermittlung und Auswertung der reflektionsbedingten Amplitudenabnahme der Ultraschallstrahlung die Temperatur der Flüssigkeit ermitteln. Zur Ermittlung der Amplitudenabnahme werden die Amplitudenspitzenwerte gemessen, welche jedoch stets mit Störsignalen und einem Rauschen überlagert sind. Somit ist eine exakte Bestimmung der Amplitudenabnahme nach nur einer Reflektion kaum möglich. Aus diesem Grunde wird die Amplitudenabnahme von Ultraschallwellen untersucht, die von den beiden sich gegenüberstehenden Oberflächen mehrfach reflektiert werden. Bei relativ dicken Wandungen ist dies jedoch nicht durchführbar, da die Amplituden der Ultraschallwellen, die auch beim Durchlaufen der Wandung eine Dämpfung erfahren, nach mehrfacher Reflektion zu sehr abgeschwächt und somit nicht mehr messbar werden. Zudem bedarf es für das Verfahren und die Vorrichtung eine mit der Wandung in Kontakt stehenden Flüssigkeit, mit welcher der Reflektionsfaktor merklich beeinflussbar ist. Bei Gasen ist hingegen keine temperaturabhängige Änderung des Reflektionsfaktors mehr messbar, da aufgrund des sehr hohen Reflexionsfaktors von annähernd 1 dessen geringe Änderung besonders im Störumfeld nicht mehr eindeutig nachweisbar ist.

Der Erfindung liegt nun die Aufgabe zu Grunde, ein Verfahren und eine Messvorrichtung anzugeben, mit welchen eine möglichst einfache, zuverlässige, gegenüber dem Stand der Technik exaktere und universeller einsetzbare Temperaturbestimmung ermöglicht werden kann.

Zur Lösung der Aufgabe wird ein Verfahren entsprechend den Merkmalen des unabhängigen Patentanspruchs 1 angegeben.

Bei dem erfindungsgemäßen Verfahren handelt es sich um ein Verfahren zur Bestimmung der Temperatur einer abgewandten Fläche eines Objektes, bei welchem
a) mittels einer Sende-/Empfangseinheit mindestens ein Ultraschallpuls durch eine der Sende-/Empfangseinheit zugewandte Fläche des Objektes hindurch in das Objekt ausgesendet wird,
b) der mindestens eine Ultraschallpuls an der der Sende-/Empfangseinheit abgewandten Objektfläche zumindest teilweise in Richtung der Sende-/Empfangseinheit reflektiert wird,
   und
c) der reflektierte Anteil des mindestens einen ausgesandten Ultraschallpulses von der Sende-/Empfangseinheit empfangen wird.

Das Verfahren ist dabei dadurch gekennzeichnet, dass
d) mindestens ein Temperaturwert für die der Sende-/Empfangseinheit zugewandte Objektfläche ermittelt wird,
e) mindestens ein Wert für die Laufzeit des mindestens einen Ultraschallpulses durch das Objekt bestimmt wird,
   und
f) mittels des mindestens einen Temperaturwertes für die der Sende-/Empfangseinheit zugewandte Objektfläche und des mindestens einen Laufzeitwertes mindestens ein Temperaturwert für die der Sende-/Empfangseinheit abgewandten Objektfläche bestimmt wird.

Es wird dabei ausgenutzt, dass sich zum einen die Ausdehnung eines Objektes, insbesondere einem metallischen Objekt, und zum anderen die Schallgeschwindigkeit in einem Objekt, insbesondere in einem metallischen Objekt, temperaturabhängig ändern können. So kann beispielsweise der Abstand zweier gegenüberliegender Oberflächen eines Objektes, beispielsweise einer Wandung, mit der Temperatur zunehmen oder abnehmen, während sich die Schallgeschwindigkeit in der Regel bei zunehmender Temperatur verringert bzw. bei sinkender Temperatur erhöht. Die Laufzeit eines Ultraschallpulses durch das Objekt, wobei der Ultraschallpuls in das Objekt eingestrahlt und von der der Eintrittsoberfläche gegenüberliegenden Objektoberfläche zur Eintrittsoberfläche reflektiert wird, liefert somit Informationen über die Ausdehnung des Objektes sowie über die Schallgeschwindigkeit im Objekt, so dass auf die Temperatur des Objektes geschlossen werden kann.

Vorteilhafte Ausgestaltungen des Verfahrens gemäß der Erfindung ergeben sich aus den von Anspruch 1 abhängigen Ansprüchen.

Es ist insbesondere vorteilhaft, wenn mittels mindestens eines ersten der Sende-/Empfangseinheit zugeordneten Schallwandlers der mindestens eine Ultraschallpuls in das Objekt ausgesendet wird und mittels mindestens eines zweiten der Sende-/Empfangseinheit zugeordneten Schallwandlers der reflektierte Anteil des mindestens einen ausgesandten Ultraschallpulses empfangen wird. Damit kann beispielsweise der mindestens eine Ultraschallpuls in einem von der Oberflächennormalen der Eintrittsoberfläche abweichenden Winkel in das Objekt ausgesendet werden, um insbesondere die Laufstrecke des mindestens eine Ultraschallpulses bei sehr nahe beieinander liegenden Oberflächen der Wandung zu vergrößern. Zudem ist beispielsweise auch eine Messung an Objekten möglich, deren für die Messung relevanten Objektflächen nicht parallel zueinander stehen.

Vorteilhaft ist auch, wenn mittels mindestens eines der Sende-/Empfangseinheit zugeordneten Schallwandlers sowohl der mindestens eine Ultraschallpuls in das Objekt ausgesendet wird als auch der reflektierte Anteil des mindestens einen ausgesandten Ultraschallpulses empfangen wird. So lässt sich beispielsweise eine besonders kompakte Sende-/Empfangseinheit ausgestalten.

Vorteilhafterweise wird der mindestens eine Ultraschallpuls auf die der Sende-/Empfangseinheit abgewandte Objektfläche fokussiert. Damit ist eine exaktere Laufzeitmessung aufgrund einer Leistungsbündelung und des damit erreichbaren höheren Störabstandes möglich.

Zur weiteren Lösung der Aufgabe wird eine Messvorrichtung entsprechend den Merkmalen des unabhängigen Patentanspruchs 5 angegeben.

Bei der erfindungsgemäßen Messvorrichtung handelt es sich um eine Messvorrichtung zur Bestimmung der Temperatur einer abgewandten Fläche eines Objektes, welche Vorrichtung folgende Teile aufweist, nämlich
a) eine Sende-/Empfangseinheit
   a1) mit Mitteln zum Senden mindestens eines Ultraschallpulses durch eine der Sende-/Empfangseinheit zugewandte Fläche des Objektes hindurch in das Objekt
      und
   a2) mit Mitteln zum Empfangen zumindest eines an einer der Sende-/Empfangseinheit abgewandten Objektfläche reflektierten Anteils des mindestens einen auszusendenden Ultraschallpulses.

Die Messvorrichtung ist dabei gekennzeichnet, durch
b) mindestens ein Mittel zur Bestimmung mindestens eines Temperaturwertes für die der Sende-/Empfangseinheit zugewandte Objektfläche,
   und
c) ein Auswertemittel, umfassend
   c1) Mittel zur Bestimmung mindestens eines Wertes für die Laufzeit des mindestens einen Ultraschallpulses durch das Objekt,
      und
   c2) Mittel zur Zuordnung des mindestens einen Temperaturwertes für die der Sende-/Empfangseinheit zugewandte Objektfläche und des mindestens einen Laufzeitwertes mindestens einem Temperaturwert für die der Sende-/Empfangseinheit abgewandten Objektfläche.

Bei der erfindungsgemäßen Messvorrichtung ergeben sich die vorstehend für das erfindungsgemäße Verfahren erläuterten Vorteile.

Vorteilhafte Ausgestaltungen der Messvorrichtung gemäß der Erfindung ergeben sich aus den von Anspruch 5 abhängigen Ansprüchen.

Es ist insbesondere vorteilhaft, wenn das mindestens eine Mittel zur Bestimmung des mindestens einen Temperaturwertes für die der mindestens einen Sende-/Empfangseinheit zugewandte Objektfläche mindestens ein Thermoelement ist. Mit einem Thermoelement steht ein zuverlässiges, preisgünstiges und leicht zu beziehendes Mittel zur Temperaturbestimmung der Einstrahloberfläche zur Verfügung.

Dabei ist es von Vorteil, dass die Messvorrichtung mindestens ein erstes Mittel, insbesondere einen ersten Schallwandler, zum Senden des mindestens einen Ultraschallpulses in das Objekt und mindestens ein zweites Mittel, insbesondere einen zweiten Schallwandler, zum Empfangen des mindestens einen von der der Sende-/Empfangseinheit abgewandten Objektfläche reflektierten Ultraschallpulses aufweist. Damit kann die Sende-/Empfangseinheit in einem so genannten "pitch-catch"-Modus betrieben werden.

Auch ist es von Vorteil, dass die Messvorrichtung mindestens ein Mittel, insbesondere einen Schallwandler, sowohl zum Senden des mindestens einen Ultraschallpulses in das Objekt als auch zum Empfangen des mindestens einen von der der Sende-/Empfangseinheit abgewandten Objektfläche reflektierten Ultraschallpulses aufweist. Damit kann die Sende-/Empfangseinheit in einem so genannten "puls-echo"-Modus betrieben werden.

Vorteilhaft erweist sich, dass die Sende-/Empfangseinheit einen zwischen Schallwandler und Objekt angeordneten akustischen Wellenleiter aufweist. Damit können die jeweiligen Ultraschallwandler in einiger Entfernung positioniert werden, um Zerstörung durch beispielsweise hohe Temperaturen des Objektes zu vermeiden.

Es ist von Vorteil, dass der mindestens eine Ultraschallpuls auf die der Sende-/Empfangseinheit abgewandte Objektfläche fokussierbar ist. Dies ermöglicht beispielsweise eine exaktere Bestimmung der Laufzeit des mindestens einen Ultraschalpulses durch das Objekt.

Mit der Erfindung wird ferner eine Verwendung des Verfahrens zur Temperaturbestimmung einer Objektfläche in einer Strömungsmaschine, insbesondere einer Gas- oder Dampfturbine, wobei das Objekt eine Wandung, insbesondere eine Strömungskanalwandung, der Strömungsmaschine ist. Das erfindungsgemäße Verfahren ermöglicht eine berührungslose Temperaturmessung des durch die Strömungsmaschine strömenden Fluids, insbesondere gasförmigen Fluids, da die mit dem Fluid in Kontakt stehende Oberfläche der Wandung in guter Näherung die Temperatur des Fluids annimmt.

Mit der Erfindung wird überdies eine Verwendung der Messvorrichtung zur Temperaturbestimmung einer Objektfläche an einer Strömungsmaschine, insbesondere einer Gas- oder Dampfturbine, wobei das Objekt eine Wandung, insbesondere eine Strömungskanalwandung, der Strömungsmaschine ist. Bei der Verwendung der erfindungsgemäßen Messvorrichtung ergeben sich die vorstehend für die Verwendung des erfindungsgemäßen Verfahrens erläuterten Vorteile.

Bevorzugte, jedoch keinesfalls einschränkende Ausführungsbeispiele der Vorrichtung werden nunmehr anhand der Zeichnung näher erläutert. Zur Veranschaulichung ist die Zeichnung nicht maßstäblich ausgeführt und gewisse Merkmale sind schematisiert dargestellt. Im Einzelnen zeigen
Figur 1 eine Messanordnung mit einem Ultraschallwandler,
Figur 2 eine Messanordnung mit zwei Ultraschallwandlern und
Figur 3 eine Gasturbine des Stands der Technik in einer teilweise aufgeschnittenen, perspektivischen Ansicht.

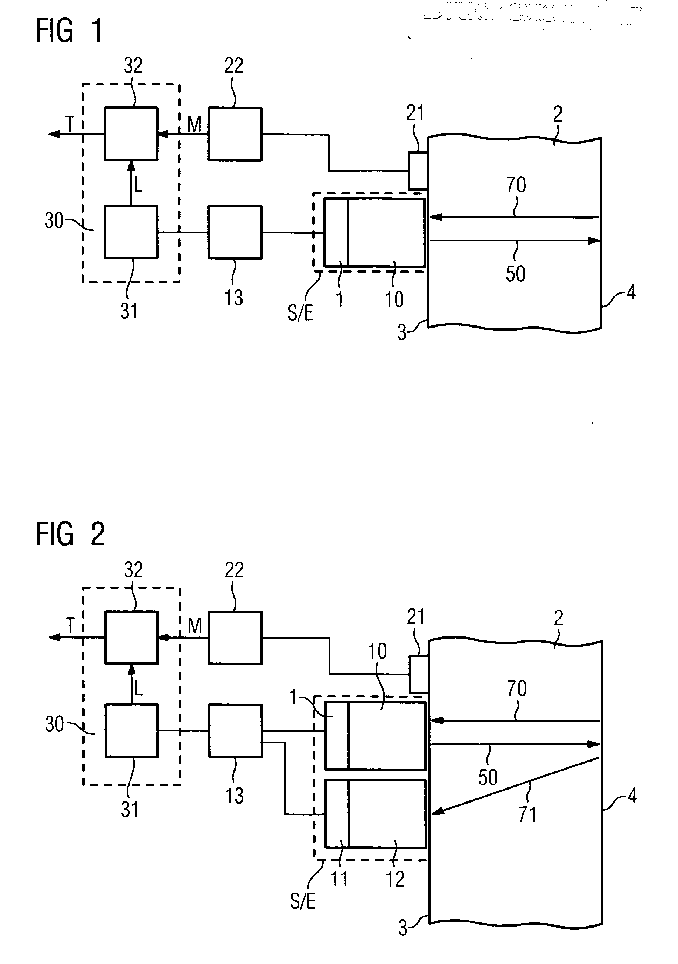

Einander entsprechende Teile sind in den Figuren 1 bis 3 mit denselben Bezugszeichen versehen.

In Figur 1 ist eine erfindungsgemäße Messanordnung mit einer Sende-/Empfangseinheit S/E dargestellt, die als Mittel 1 zum Senden und Empfangen von Ultraschallstrahlen 50, 70 einen Ultraschallwandler, insbesondere in Form eines Piezo- oder magnetostriktives Wandlersystems, umfasst. Hierzu wird auf die Literaturstelle: "Physik und Technik des Ultraschalls", H. Kuttruff, S. Hirzel, Verlag Stuttgart, 1988, Seiten 132 bis 137 verwiesen. Angesteuert von einem Steuermittel 13 mittels elektrischer Signale wird von der Sende-/Empfangseinheit S/E mindestens ein Ultraschallpuls 50 in ein Objekt 2, das beispielsweise auch beschichtet sein kann, in Richtung der der Sende-/Empfangseinheit S/E abgewandten Objektfläche 4 gesandt. An der Oberfläche 4 oder zumindest in einem oberflächennahen Bereich der Oberfläche 4 wird der mindestens eine Ultraschallpuls 50 zumindest teilweise reflektiert, so dass der reflektierte Anteil 70 des ausgesandten mindestens einen Ultraschallpulses 50 von der Sende-/Empfangseinheit S/E detektiert wird. Bei der Detektion wird das empfangene akustische Signal 70 vom Ultraschallwandler 1 in ein elektrisches Signal gewandelt. Hierbei kann der der Sende-/Empfangseinheit S/E zugeordnete Ultraschallwandler 1 direkt auf der der Sende-/Empfangseinheit S/E zugewandten Objektfläche 3 angebracht, oder auch, wie in Figur 1 angegeben, über einen akustischen Wellenleiter 10 mit der Objektfläche 3 in Kontakt sein. Eine Fokussierung des mindestens einen Ultraschallpulses 50 auf die der Sende-/Empfangseinheit S/E abgewandte Objektfläche 4 unterstützt hierbei die Effizienz bei der Reflektion und darauf folgender Detektion vorteilhaft.

Je nach Abstand beider Objektoberflächen 3, 4 voneinander, der in einem Bereich von 1 mm bis 500 mm liegen kann, ist die Frequenz des mindestens einen Ultraschallpulses 50, 70 in einem Frequenzbereich von 1 MHz bis 50 MHz angesiedelt.

Mit Hilfe eines Mittels 21 zur Temperaturbestimmung, insbesondere eines Thermoelements, wird mindestens ein Wert M für die Temperatur der der Sende-/Empfangseinheit S/E zugewandten Objektfläche 3 ermittelt. Hierzu ist das Mittel 21 zur Temperaturbestimmung an der Objektfläche 3 in unmittelbarer Nähe der Sende-/Empfangseinheit S/E angebracht. Das Mittel 21 zur Temperaturbestimmung wird dabei von einem dem Mittel 21 zur Temperaturbestimmung zugeordneten Steuermittel 22 gesteuert und abgefragt. Das Steuermittel 22 ist mit einer Auswerteeinheit 30 verbunden, an welche der mindestens eine ermittelte Temperaturwert M der Objektoberfläche 3 vom Steuermittel 22 übermittelt wird. Es ist auch denkbar mehrere Mittel 21 zur Temperaturbestimmung um die Sende/-Empfangseinheit S/E anzuordnen, um lokale Temperaturabweichungen auf der Objektoberfläche 3 zu kompensieren.

Das der Sende/-Empfangseinheit S/E zugeordnete Steuermittel 13 ist ebenfalls mit dem Auswertemittel 30 verbunden. In einem ersten Auswertungsschritt wird mindestens ein Wert L für die Laufzeit des mindestens einen Ultraschallpulses 50, 70 durch das Objekt 2 bestimmt. Hierzu umfasst das Auswertemittel 30 entsprechende Mittel 31 zur Bestimmung des mindestens einen Laufzeitwertes L. Die Laufzeit kann beispielsweise ermittelt werden, indem der Zeitdifferenz zwischen den korrespondierenden Eingangsflanken oder den korrespondierenden ersten Nulldurchgängen des mindestens einen ausgesandten Ultraschallpulses 50 und des reflektierten und detektierten Ultraschallpulsanteils 70 ein entsprechender Wert L zugeordnet wird. Die Laufzeit kann aber auch mittels des bekannten Kreuzkorrelationsverfahrens ermittelt werden, bei welchem der ausgesandte Ultraschallpuls 50 mit dem empfangenen Ultraschalpulsanteil 70 mittels der Kreuzkorrelationsfunktion in Korrelation gebracht wird. Hieraus lässt sich direkt ein Wert L für die Laufzeit des Ultraschallpulses 50, 70 durch das Objekt 2 bestimmen. Beide Verfahren zur Laufzeitbestimmung erfordern keine lineare Amplitudenverstärkung des empfangenen Ultraschallpulsanteils 70, und die entsprechenden Signalverstärker, die beispielsweise der der Sende/-Empfangseinheit S/E zugeordnete Steuermittel 13 zugeordnet sind, können in Bezug auf Störfestigkeit auf optimale Verstärkung angepasst werden.

Die Laufzeit des mindestens einen Ultraschallpulses 50, 70 ist ein Maß für die von der Temperatur abhängige Schallgeschwindigkeit im Objekt 2 als auch ein Maß für den Abstand der beiden Objektoberflächen 3, 4 voneinander. Die Laufzeit ist somit in Zusammenhang mit der thermischen Ausdehnung des Objektes 2 eine integrale Wiedergabe der Temperaturverteilung und des Wärmeflusses im Objekt 2.

In einem nächsten Auswertungsschritt werden mittels des mindestens einen Laufzeitwertes L und des mindestens einen Temperaturwertes M der der Sende/-Empfangseinheit S/E zugewandten Objektoberfläche 3 mindestens ein Temperaturwert T für die der Sende-/Empfangseinheit S/E abgewandten Objektfläche 4 bestimmt. Dies erfolgt mittels eines der Auswerteeinheit 30 zugeordneten Mittels 32 zur Zuordnung, indem der mindestens eine Laufzeitwert L und des mindestens einen Temperaturwert M der Objektoberfläche 3 mit Werten einer Tabelle verglichen und einer Temperatur für die der Sende-/Empfangseinheit S/E abgewandten Objektfläche 4 zugeordnet werden. Die Wertetabelle enthält dabei insbesondere unterschiedliche Kombinationen von den beiden Objektoberflächen 3 und 4 zugeordneten Temperaturwerten M, T und Laufzeitwerten L, die zuvor in Objekten gleichen Materials und mit vergleichbaren Abmessungen, insbesondere mit vergleichbarem Abstand beider für die Messung relevanter Objektflächen, gemessen wurden.

Mittels des mindestens einen Temperaturwertes M der der Sende/-Empfangseinheit S/E zugewandten Objektoberfläche 3 und bei Kenntnis der Wärmeleitfähigkeit des zu untersuchenden Objektes 2 kann auch bei verschiedenen bekannten Abständen beider für die Messung relevanter Objektflächen 3 und 4 auf die Temperatur der der Sende-/Empfangseinheit S/E abgewandten Objektfläche 4 extrapoliert werden.

Die gemäß der Erfindung ermittelte Temperatur T für die der Sende-/Empfangseinheit S/E abgewandten Objektfläche 4 wird über nicht näher dargestellte Anzeige- bzw. Meldeeinheiten an eine überwachende Stelle gemeldet bzw. an eine Zentrale weitergeleitet.

Die Auswerteeinheit 30 kann auch mit einer Vergleichsfunktion ausgestattet sein, mit der das Unter- oder Überschreiten eines vorgebbaren Temperaturschwellwertes feststellbar ist. So kann beispielsweise bei Unter- oder Überschreiten des Schwellwertes eine Meldung automatisch ausgegeben werden, um eine geeignete Schutzmaßnahme, wie beispielsweise das Abschalten einer Strömungsmaschine oder das Zuschalten von zusätzlichen Kühlmaßnahmen in einem Kraftwerk, einzuleiten.

In Figur 2 ist eine erfindungsgemäße Messanordnung mit einer Sende-/Empfangseinheit S/E dargestellt, die zwei Ultraschallwandler als Mittel (1, 11) zum Senden und/oder Empfangen umfasst. In der Figur 2 ist bezeichnet mit
- 11: ein weiterer Ultraschallwandler,
- 71: ein Ultraschallpuls bzw. ein Ultraschallpulsanteil und
- 12: ein weiterer akustischer Wellenleiter.

Je nach Beschaffenheit und Geometrie des Objektes 2 kann ein vom ersten Ultraschallwandler 1 ausgesandter Ultraschallpuls 50 teilweise zu diesem zurück reflektiert werden oder aber auch an der reflektierenden Objektfläche 4 derart umgelenkt werden, dass der reflektierte Ultraschallpulsanteil 71 effektiver von einem zweiten Ultraschallwandler 11 detektiert wird.

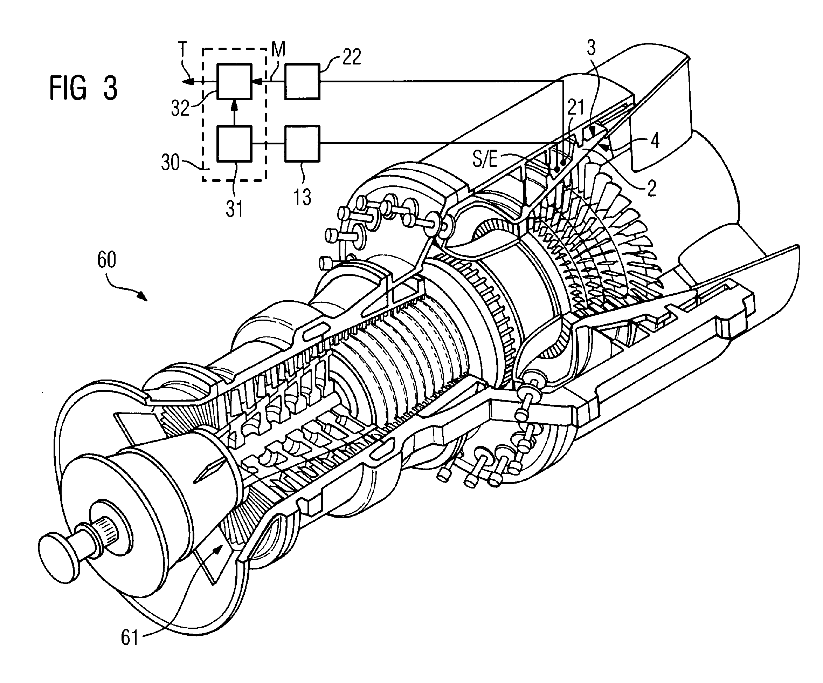

Weist die der Sende-/Empfangseinheit S/E zugewandte Objektfläche 3 eine erhöhte Temperatur auf, die beispielsweise bei Gasturbinen 60 (siehe Figur 3) im Bereich einiger 100°C liegen kann, so besteht bei allen vorangehend beschriebenen Ausführungsbeispiele gemäß den beiden Figuren 1 und 2 die Möglichkeit, dass der jeweilige Ultraschallwandler 1, 11 in einiger Entfernung positioniert werden muss, um dessen Zerstörung zu vermeiden. In diesem Fall kann der vom Ultraschallwandler 1, 11 erzeugte Ultraschallpuls 50 mit Hilfe eines akustischen Wellenleiters 10, 12 (Active Wave Guides) in das Objekt 2 eingekoppelt und aus dem Objekt 2 ausgekoppelt werden.

Beide vorangehend beschriebenen Ausführungsbeispiele gemäß den Figuren 1 und 2 sind für Temperaturmessungen geeignet, bei denen die der Sende-/Empfangseinheit S/E abgewandte Objektfläche 4 eine Temperatur von über 1000°C aufweist. Insbesondere eignen sich die Ausführungsbeispiele zur Temperaturmessung eines Fluidstroms in einer Strömungsmaschine 60, insbesondere einer Gas- oder Dampfturbine. In Figur 3 ist eine solche Strömungsmaschine 60 als Gasturbine des Standes der Technik dargestellt, die für eine hohe Gaseintrittstemperatur von ca. 1200°C konzipiert ist. Die Gasturbine 60 weist einen Strömungskanal 61 auf, durch welchen heißes Gas strömt. Der Strömungskanal 61 ist von einer Wandung 2 umgeben, an deren Außenfläche 3 die Sende-/Empfangseinheit S/E der erfindungsgemäßen Messvorrichtung beispielsweise angeordnet ist. Gemäß dem erfindungsgemäßen Verfahren können somit durch die Strömungskanalwandung 2 hindurch die Temperatur der inneren Oberfläche 4 der Strömungskanalwandung 2 und damit die Temperatur des mit der inneren Oberfläche 4 der Strömungskanalwandung 4 in Kontakt stehenden Gases bestimmt werden.

Das erfindungsgemäße Verfahren und die erfindungsgemäße Vorrichtung können im Allgemeinen für alle Messvorrichtungen verwendet werden, bei denen eine Temperaturmessung durch ein Objekt 2 hindurch, insbesondere durch eine Wandung hindurch, vorteilhaft ist, damit auf eine Durchführung durch das Objekt 2, insbesondere durch die Wandung, verzichtet werden kann. Beispielsweise sind hier Druckrohre in Kraftwerkanlagen oder Druckkessel oder Gussformen zu nennen.

## Patentansprüche

1. Verfahren zur Bestimmung der Temperatur einer abgewandten Fläche (4) eines Objektes (2), bei welchem
a) mittels einer Sende-/Empfangseinheit (S/E) mindestens ein Ultraschallpuls (50) durch eine der Sende-/Empfangseinheit (S/E) zugewandte Fläche (3) des Objektes (2) hindurch in das Objekt (2) ausgesendet wird,
b) der mindestens eine Ultraschallpuls (50) an der der Sende-/Empfangseinheit (S/E) abgewandten Objektfläche (4) zumindest teilweise in Richtung der Sende-/Empfangseinheit (S/E) reflektiert wird,
und
c) der reflektierte Anteil (70, 71) des mindestens einen ausgesandten Ultraschallpulses (50) von der Sende-/Empfangseinheit (S/E) empfangen wird,
**dadurch gekennzeichnet, dass**
d) mindestens ein Temperaturwert (M) für die der Sende-/Empfangseinheit (S/E) zugewandte Objektfläche (3) ermittelt wird,
e) mindestens ein Wert (L) für die Laufzeit des mindestens einen Ultraschallpulses (50, 70, 71) durch das Objekt (2) bestimmt wird,
und
f) mittels des mindestens einen Temperaturwertes (M) für die der Sende-/Empfangseinheit (S/E) zugewandte Objektfläche (3) und des mindestens einen Laufzeitwertes (L) mindestens ein Temperaturwert (T) für die der Sende-/Empfangseinheit (S/E) abgewandten Objektfläche (4) bestimmt wird.

2. Verfahren nach Anspruch 1, **dadurch gekennzeichnet, dass** mittels mindestens eines ersten der Sende-/Empfangseinheit (S/E) zugeordneten Schallwandlers (1) der mindestens eine Ultraschallpuls (50) in das Objekt (2) ausgesendet wird und mittels mindestens eines zweiten der Sende-/Empfangseinheit (S/E) zugeordneten Schallwandlers (11) der reflektierte Anteil (71) des mindestens einen ausgesandten Ultraschallpulses (50) empfangen wird.

3. Verfahren nach Anspruch 1 oder 2, **dadurch gekennzeichnet, dass** mittels mindestens eines der Sende-/Empfangseinheit (S/E) zugeordneten Schallwandlers (1, 11) sowohl der mindestens eine Ultraschallpuls (50) in das Objekt (2) ausgesendet wird als auch der reflektierte Anteil des mindestens einen ausgesandten Ultraschallpulses (70, 71) empfangen wird.

4. Verfahren nach einem der vorangehenden Ansprüche, **gekennzeichnet dadurch, dass** der mindestens eine Ultraschallpuls (50) auf die der Sende-/Empfangseinheit (S/E) abgewandte Objektfläche (4) fokussiert wird.

5. Messvorrichtung zur Bestimmung der Temperatur einer abgewandten Fläche (4) eines Objektes (2), welche Vorrichtung folgende Teile aufweist, nämlich
a) eine Sende-/Empfangseinheit (S/E)
a1) mit Mitteln (1) zum Senden mindestens eines Ultraschallpulses (50) durch eine der Sende-/Empfangseinheit (S/E) zugewandte Fläche (3) des Objektes (2) hindurch in das Objekt (2)
und
a2) mit Mitteln zum Empfangen (1, 11) zumindest eines an der der Sende-/Empfangseinheit (S/E) abgewandten Objektfläche (4) reflektierten Anteils (70, 71) des mindestens einen auszusendenden Ultraschallpulses (50),
**gekennzeichnet, durch**
b) mindestens ein Mittel (21) zur Bestimmung mindestens eines Temperaturwertes (M) für die der Sende-/Empfangseinheit (S/E) zugewandte Objektfläche (3),
und
c) ein Auswertemittel (30), umfassend
c1) Mittel (31) zur Bestimmung mindestens eines Wertes (L) für die Laufzeit des mindestens einen Ultraschallpulses (50, 70, 71) **durch** das Objekt (2),
und
c2) Mittel (32) zur Zuordnung des mindestens einen Temperaturwertes (M) für die der Sende-/Empfangseinheit (S/E) zugewandte Objektfläche (3) und des mindestens einen Laufzeitwertes (L) mindestens einem Temperaturwert (T) für die der Sende-/Empfangseinheit (S/E) abgewandten Objektfläche (4).

6. Messvorrichtung nach Anspruch 5, **dadurch gekennzeichnet, dass** das mindestens eine Mittel (21) zur Bestimmung des mindestens einen Temperaturwertes (M) für die der mindestens einen Sende-/Empfangseinheit (S/E) zugewandte Objektfläche (3) mindestens ein Thermoelement ist.

7. Messvorrichtung nach Anspruch 5 oder 6, **gekennzeichnet durch** mindestens ein erstes Mittel (1), insbesondere einen ersten Schallwandler, zum Senden des mindestens einen Ultraschallpulses (50) in das Objekt (2) und mindestens ein zweites Mittel (11), insbesondere einen zweiten Schallwandler, zum Empfangen des mindestens einen von der der Sende-/Empfangseinheit (S/E) abgewandten Objektfläche (4) reflektierten Ultraschallpulses (71).

8. Messvorrichtung nach einem der Ansprüche 5 bis 7, **gekennzeichnet durch** mindestens ein Mittel (1, 11), insbesondere einen Schallwandler (1, 11), sowohl zum Senden des mindestens einen Ultraschallpulses (50) in das Objekt (2) als auch zum Empfangen des mindestens einen von der der Sende-/Empfangseinheit (S/E) abgewandten Objektfläche (4) reflektierten Ultraschallpulses (70).

9. Messvorrichtung nach einem der Ansprüche 7 oder 8, **gekennzeichnet dadurch, dass** die Sende-/Empfangseinheit (S/E) einen zwischen Schallwandler (1, 11) und Objekt (2) angeordneten akustischen Wellenleiter (10, 12) aufweist.

10. Messvorrichtung nach einem der Ansprüche 5 bis 9, **gekennzeichnet dadurch, dass** der mindestens eine Ultraschallpuls (50) auf die der Sende-/Empfangseinheit (S/E) abgewandte Objektfläche (4) fokussierbar ist.

11. Verwendung des Verfahrens nach einem der Ansprüche 1 bis 4 zur Temperaturbestimmung in einer Strömungsmaschine (60), insbesondere einer Gas- oder Dampfturbine, wobei das Objekt (2) eine Wandung, insbesondere eine Strömungskanalwandung, der Strömungsmaschine (60) ist.

12. Verwendung der Messvorrichtung nach einem der Ansprüche 5 bis 10 an einer Strömungsmaschine (60), insbesondere einer Gas- oder Dampfturbine, wobei das Objekt (2) eine Wandung, insbesondere eine Strömungskanalwandung, der Strömungsmaschine (60) ist.

## Claims

1. Method for determining the temperature of an away-facing surface (4) of an object (2), in which
a) at least one ultrasonic pulse (50) is transmitted by means of a transmission/reception unit (S/E) through a surface (3) of the object (2) which faces the transmission/reception unit (S/E) into the object (2),
b) the at least one ultrasonic pulse (50) is at least partially reflected in the direction of the transmission/reception unit (S/E) on the object surface (4) facing away from the transmission/reception unit (S/E),
and
c) the reflected fraction (70, 71) of the at least one transmitted ultrasonic pulse (50) is received by the transmission/reception unit (S/E),
**characterized in that**
d) at least one temperature value (M) for the object surface (3) facing the transmission/reception unit (S/E) is determined,
e) at least one value (L) for the transit time of the at least one ultrasonic pulse (50, 70, 71) through the object (2) is determined,
and
f) at least one temperature value (T) for the object surface (4) facing away from the transmission/reception unit (S/E) is determined by means of the at least one temperature value (M) for the object surface (3) facing the transmission/reception unit (S/E) and by means of the at least one transit time value (L).

2. Method according to Claim 1, **characterized in that** the at least one ultrasonic pulse (50) is transmitted into the object (2) by means of at least one first sound transducer (1) assigned to the transmission/reception unit (S/E) and the reflected fraction (71) of the at least one transmitted ultrasonic pulse (50) is received
by means of at least one second sound transducer (11) assigned to the transmission/reception unit (S/E).

3. Method according to Claim 1 or 2, **characterized in that**, by means of at least one sound transducer (1, 11) assigned to the transmission/reception unit (S/E), both the at least one ultrasonic pulse (50) is transmitted into the object (2) and the reflected fraction of the at least one transmitted ultrasonic pulse (70, 71) is received.

4. Method according to one of the preceding claims, **characterized in that** the at least one ultrasonic pulse (50) is focused onto the object surface (4) facing away from the transmission/reception unit (S/E).

5. Measurement device for determining the temperature of an away-facing surface (4) of an object (2), said device having the following parts, namely
a) a transmission/reception unit (S/E),
a1) with means (1) for transmitting at least one ultrasonic pulse (50) through a surface (3) of the object (2) which faces the transmission/reception unit (S/E) into the object (2)
and
a2) with means for receiving (1, 11) at least one fraction (70, 71), reflected on the object surface (4) facing away from the transmission/reception unit (S/E), of the at least one ultrasonic pulse (50) to be transmitted,
**characterized by**
b) at least one means (21) for determining at least one temperature value (M) for the object surface (3) facing the transmission/reception unit (S/E),
and
c) an evaluation means (30) comprising
c1) means (31) for determining at least one value (L) for the transit time of the at least one ultrasonic pulse (50, 70, 71) through the object (2),
and
c2) means (32) for the assignment of the at least one temperature value (M) for the object surface (3) facing the transmission/reception unit (S/E) and of the at least one transit time value (L) to at least one temperature value (T) for the object surface (4) facing away from the transmission/reception unit (S/E).

6. Measurement device according to Claim 5, **characterized in that** the at least one means (21) for determining the at least one temperature value (M) for the object surface (3) facing the at least one transmission/reception unit (S/E) is at least one thermocouple.

7. Measurement device according to Claim 5 or 6, **characterized by** at least one first means (1), in particular one first sound transducer, for transmitting the at least one ultrasonic pulse (50) into the object (2) and at least one second means (11), in particular one second sound transducer, for receiving the at least one ultrasonic pulse (71) reflected from the object surface (4) facing away from the transmission/reception unit (S/E).

8. Measurement device according to one of Claims 5 to 7, **characterized by** at least one means (1, 11), in particular one sound transducer (1, 11), both for transmitting the at least one ultrasonic pulse (50) into the object (2) and for receiving the at least one ultrasonic pulse (70) reflected from the object surface (4) facing away from the transmission/reception unit (S/E).

9. Measurement device according to either one of Claims 7 and 8, **characterized in that** the transmission/reception unit (S/E) has an acoustic waveguide (10, 12) arranged between the sound transducer (1, 11) and the object (2).

10. Measurement device according to one of Claims 5 to 9, **characterized in that** the at least one ultrasonic pulse(50) can be focused onto the object surface (4) facing away from the transmission/reception unit (S/E).

11. Use of the method according to one of Claims 1 to 4 for temperature determination in a turbomachine (60), in particular a gas or steam turbine, the object (2) being a wall, in particular a flow duct wall, of the turbomachine (60).

12. Use of the measurement device according to one of Claims 5 to 10 on a turbomachine (60), in particular a gas or steam turbine, the object (2) being a wall, in particular a flow duct wall, of the turbomachine (60).

## Revendications

1. Procédé de détermination de la température d'une surface (4) opposée d'un objet (2), dans lequel
a) on émet au moyen d'une unité (S/E) d'émission/réception au moins une impulsion (50) ultrasonore dans l'objet (2) en traversant une surface (3) de l'objet (2) tournée vers l'unité (S/E) d'émission/réception,
b) on réfléchit au moins en partie en direction de l'unité (S/E) d'émission/réception au moins une impulsion ( 50) ultrasonore sur la surface (4) de l'objet opposé à l'unité (S/E) d'émission/réception,
et
c) on reçoit la proportion (70, 71) réfléchie de la au moins une impulsion (50) ultrasonore émise par l'unité ( S/E) d'émission/réception,
**caractérisé en ce que**
d) on détermine au moins une valeur (M) de température pour la surface (3) de l'objet tournée vers l'unité (S/E) d'émission/réception,
e) on détermine au moins une valeur (L) pour la durée de propagation de la au moins une impulsion (50, 70, 71 ) ultrasonore à travers l'objet (2) et
f) au moyen de la au moins une valeur (M) de température pour la surface (3) de l'objet tournée vers l'unité (S/E) d'émission/réception et de la au moins une valeur (L) de durée de propagation, on détermine au moins une valeur (T) de la température de la surface (4) de l'objet opposée à l'unité (S/E) d'émission/réception.

2. Procédé suivant la revendication 1, **caractérisé en ce qu'**au moyen d'au moins un premier transducteur (1) acoustique associé à l'unité (S/E) d'émission/réception on émet la au moins une impulsion (50) ultrasonore dans l'objet (2) et au moyen d'au moins un transducteur (11) acoustique associé à l'unité (S/E) d'émission/réception on reçoit la proportion (71) réfléchie sur la au moins une impulsion (50 ) ultrasonore émise.

3. Procédé suivant la revendication 1 ou 2, **caractérisé en ce qu'**au moyen d'au moins un transducteur (1, 11) acoustique associé à l'unité (S/E) d'émission/réception, à la fois on émet la au moins une impulsion (50) ultrasonore dans l'objet (2) et on reçoit la proportion réfléchie de la au moins une impulsion (70, 71 ) ultrasonore émise.

4. Procédé suivant l'une des revendications précédentes, **caractérisé en ce que** l'on focalise la au moins une impulsion (50) ultrasonore sur la surface (4) de l'objet opposée à l'unité (S/E) d'émission/réception.

5. Dispositif de mesure pour déterminer la température d'une surface (4) opposée d'un objet (2), ce dispositif ayant les parties suivantes, à savoir
a) une unité (S/E) d'émission/réception
a1) ayant des moyens (1) d'émission d'au moins une impulsion (50) ultrasonore dans l'objet à travers une surface (3) de l'objet (2) tournée vers l'unité (S/E) d'émission/réception
et
a2) ayant des moyens de réception (1, 11) d'au moins une proportion (70, 71) de la au moins une impulsion (50) ultrasonore émise réfléchie sur la surface (4) de l'objet opposée à l'unité (S/E) d'émission/réception,
**caractérisé par**
b) au moins un moyen (21) de détermination d'au moins une valeur (M) de température de la surface (3) de l'objet tournée vers l'unité (S/E) d'émission/réception,
et
c) un moyen (30) d'exploitation, comprenant
c1) un moyen (31) de détermination d'au moins une valeur (L) de la durée de propagation de la au moins une impulsion (50, 70, 71) ultrasonore à travers l'objet (2),
et
c2) un moyen (32) d'affectation de la au moins une valeur (M) de température de la surface (13) de l'objet tournée vers l'unité (S/E) d'émission/réception et de la au moins une valeur (L ) de durée de propagation à au moins une valeur (T) de température de la surface (4) de l'objet opposée à l'unité (S/E) d'émission/réception.

6. Dispositif de mesure suivant la revendication 5, **caractérisé en ce que** le au moins un moyen (21) de détermination de la au moins une valeur (M) de température de la surface (3) de l'objet tournée vers la au moins une unité (S/E) d'émission/réception est au moins un thermocouple.

7. Dispositif de mesure suivant la revendication 5 ou 6, **caractérisé par** au moins un premier moyen (1), notamment un premier transducteur acoustique pour émettre la au moins une impulsion (50) ultrasonore dans l'objet et par au moins un deuxième moyen (11), notamment un deuxième transducteur acoustique pour recevoir la au moins une impulsion (71) ultrasonore réfléchie par la surface (4) de l'objet opposée à l'unité (S/E) d'émission/réception.

8. Dispositif de mesure suivant l'une des revendications 5 à 7, **caractérisé par** au moins un moyen (1, 11), notamment un transducteur (1, 11) acoustique, tant pour l'émission de la au moins une impulsion (50) ultrasonore dans l'objet (2) qu'également pour la réception de la au moins une impulsion (70) ultrasonore réfléchie par la surface (4) de l'objet opposée à l'unité (S/E) d'émission/réception.

9. Dispositif de mesure suivant l'une des revendications 7 ou 8, **caractérisé en ce que** l'unité (S/E) d'émission/réception a un guide d'ondes (10, 12) acoustiques disposé entre le transducteur (1, 11) acoustique et l'objet (2).

10. Dispositif de mesure suivant l'une des revendications 5 à 9, **caractérisé en ce que** la au moins une impulsion (50) ultrasonore peut être focalisée sur la surface (4) de l'objet opposée à l'unité (S/E) d'émission/réception.

11. Utilisation du procédé suivant l'une des revendications 1 à 4 pour déterminer la température d'une turbomachine (60), notamment d'une turbine à gaz ou d'une turbine à vapeur, l'objet (2) étant une paroi, notamment une paroi de canal d'écoulement de la turbomachine (60).

12. Utilisation du dispositif de mesure suivant l'une des revendications 5 à 10 dans une turbomachine (60), notamment dans une turbine à gaz ou une turbine à vapeur, l'objet (2) étant une paroi, notamment une paroi de canal d'écoulement de la turbomachine (60).
